# EUROPEAN PATENT APPLICATION

(11) **EP 4 622 071 A1**
(43) Date of publication of application: **24.09.2025**
(21) Application number: 25163316.0
(22) Date of filing: 12.03.2025
(51) Int. Cl.: H02K 7/00, H02K 7/14, H02K 9/19

(54) **COMPRESSOR MOTOR WITH A COOLING SYSTEM**

(30) Priority: 18.03.2024 US 202463566476 P
(71) Applicant: Carrier Corporation, Palm Beach Gardens, FL 33418 (US)
(72) Inventor: OKHMAN, David, Camillus (US); QIU, Yifan, Manlius (US)
(74) Representative: Dehns

(57) **Abstract**

Described herein is a motor (100) for a compressor. The motor (100) comprises a rotor (108) configured over a shaft (104), a stator (110) arranged around the rotor (108) within a housing (102) associated with the compressor, and a cooling system. The cooling system comprises a first fluidic passage (112) extending from a first end (106-1) towards a second end (106-2), along a length, of the shaft (104), and a plurality of orifices (114) configured at predefined positions on a circumference of the shaft (104), where the plurality of orifices (114) is fluidically connected to the first fluidic passage (112) via a plurality of second fluidic passages (116), wherein the motor (100) is configured to enable a refrigerant associated with the compressor to flow within the first fluidic passage (112) via the first end (106-1) of the shaft (104) and further flow out of the shaft (104) towards the stator (110) and/or the rotor (108) through the plurality of orifices (114) via the corresponding second fluidic passages (116).

## Description

### BACKGROUND

This invention relates to the field of electric motors for compressors, and more particularly, a compressor motor with a cooling system.

### SUMMARY

According to a first aspect of the invention there is provided a motor for a compressor. The motor comprises a rotor configured over a shaft, a stator arranged around the rotor within a housing associated with the compressor, and a cooling system. The cooling system comprises a first fluidic passage extending from a first end towards a second end, along a length, of the shaft, and a plurality of orifices configured at predefined positions on a circumference of the shaft, where the plurality of orifices is fluidically connected to the first fluidic passage via a plurality of second fluidic passages, wherein the motor is configured to enable a refrigerant associated with the compressor to flow within the first fluidic passage via the first end of the shaft and further flow out of the shaft towards the stator and/or the rotor through the plurality of orifices via the corresponding second fluidic passages.

Optionally, the first fluidic passage is non-parallel to a central axial axis of the shaft and the plurality of second fluidic passages extends outwards from the first fluidic passage in a radial direction from the central axial axis.

Optionally, the first fluidic passage is non-parallel to the central axial axis such that a first end of the first fluidic passage remains at a center of the first end of the shaft and a second end of the first fluidic passage extends at a predefined angle from the central axial axis towards the second end of the shaft.

Optionally, the first fluidic passage is non-parallel to the central axial axis such that rotation of the shaft about the central axis during operation of the compressor causes the received refrigerant to flow or spray out of the plurality of orifices via the plurality of second fluidic passages.

Optionally, the motor or the cooling system comprises a nozzle disposed within the housing, wherein the nozzle comprises: an inlet fluidically connected to a refrigerant line or refrigerant flow path associated with the compressor, to receive at least a portion of the refrigerant flowing through the compressor. The nozzle further comprises an outlet connected the inlet of the nozzle, wherein the outlet of the nozzle remains at a predefined gap from an opening of the first fluidic passage at the first end of the shaft, such that the nozzle sprays the received refrigerant into the first fluidic passage of the shaft while allowing the shaft to rotate without coming in contact with the nozzle.

Optionally, an exterior body at an end of the nozzle has a notch-shaped profile, wherein the first end of the shaft comprises a recess concurrent to and adapted to receive the notch-shaped end of the nozzle therein to create a labyrinth seal therebetween, such that that the nozzle sprays the received refrigerant into the first fluidic passage of the shaft while allowing the shaft to rotate without coming in contact with the notch-shaped end of the nozzle.

Optionally, the housing of the motor comprises a third fluidic passage drilled therethrough and fluidically connected to the inlet of the nozzle, to enable the supply the refrigerant associated with the compressor within the housing or into the nozzle or the shaft.

Optionally, the second end of the first fluidic passage is closed.

Optionally, a diameter of the first fluidic passage is greater than a diameter of the plurality of second fluidic passages.

Optionally, the plurality of orifices comprises a first set of orifices provided along the circumference at the first end of the shaft, and a second set of orifices provided along the circumference at the second end of the shaft.

Optionally, the first set of orifices is adjacent to a first end of a stator winding associated with the stator, and the second set of orifices is adjacent to a second end of the stator winding.

Optionally, the first set of orifices is adjacent to a first end of the rotor, and the second set of orifices is adjacent to a second end of the rotor.

Optionally, a diameter of the first set of orifices provided at the first end of the shaft is greater than a diameter of the second set of orifices provided the second end of the shaft.

Optionally, a diameter of the second fluidic passages at the first end of the shaft is greater than a diameter of the second fluidic passages at the second end of the shaft.

Optionally, the plurality of orifices comprises one or more pairs of first orifices provided along the circumference at the first end of the shaft, wherein the first orifices associated with each of the pairs are opposite to each other, and one or more pairs of second orifices provided along the circumference at the second end of the shaft, wherein the second orifices associated with each of the pairs are opposite to each other.

Optionally, the plurality of orifices comprises a first set of orifices provided along the circumference at the first end of the shaft at one or more of 0-degree angle, 45-degree angle, 90-degree angle, 135-degree angle, 180-degree angle, 225-degree angle, 270-degree angle, and 315-degree angle from a reference plane extending along a center of the first shaft, and a second set of orifices provided along the circumference at the second end of the shaft at one or more of 0-degree angle, 45-degree angle, 90-degree angle, 135-degree angle, 180-degree angle, 225-degree angle, 270-degree angle, and 315-degree angle from the reference plane.

Optionally, the compressor is a screw compressor associated with a vapor compression system.

Optionally, the housing of the motor comprises a drain area configured to receive and collect the refrigerant drained from the stator and/or the rotor.

Optionally, the motor is configured to enable supply of the drained refrigerant into a liquid drain line associated with the compressor.

Optionally, the liquid drain line is further connected to an evaporator being fluidically connected to the compressor in a refrigerant line, and wherein the nozzle is fluidically connected to a liquid injection line connected to a condenser being fluidically connected to the compressor in the refrigerant line.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary side cross-sectional view of the motor associated with a compressor, where the motor is equipped with an in-built cooling system.
FIG. 1B illustrates an exemplary representation depicting the flow of refrigerant within the motor of FIG. 1A.
FIG. 2 illustrates an exemplary representation of a refrigerant line associated with the compressor of FIG. 1A.
FIGs. 3A to 3D illustrates exemplary front cross-sectional view of the rotor shaft depicting the position of various orifices.
FIG. 4 illustrates an exemplary view depicting the fluidic engagement of the nozzle within the first end of the rotor shaft.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the specification, the components of this invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

Electric motors are integral components in a wide array of applications, notably in refrigeration, and air conditioning systems where they are configured with compressors. In these systems, the electric motor is tasked with driving the compressor, which results in substantial heat generation due to electrical and mechanical losses within the motor. If this heat is not adequately dissipated, the motor's temperature may exceed the rated limits set by the manufacturer, potentially leading to inefficiency, reduced performance, and even premature failure of the motor or the entire system.

The challenge of effectively cooling electric motors is exacerbated in configurations where the motor is closely integrated with a compressor. The compact nature of such configurations, while beneficial for saving space and improving system integration, limits the options for implementing traditional cooling solutions and complicates the thermal management strategy.

There is therefore exists a need for an improved cooling system for electric motors in compressor-integrated applications, which may achieve even and effective cooling of the motor while accommodating the physical and operational constraints of motor-compressor assemblies.

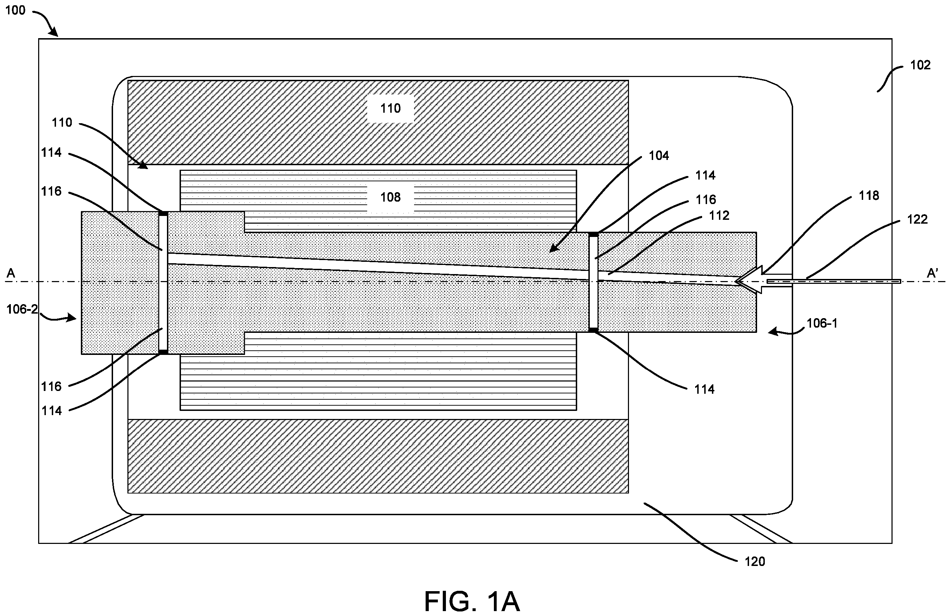

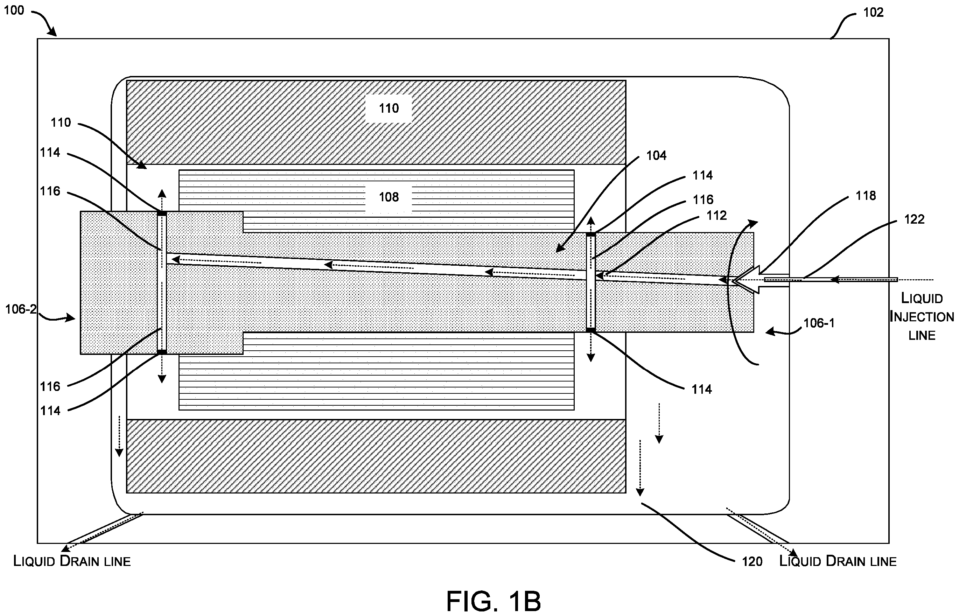

Referring to FIGs. 1A and 1B, an electric motor 100 (also referred to as a motor 100, herein) associated with a compressor is disclosed. In one or more embodiments, the compressor can be a screw compressor associated with a vapor compression system but not limited to the like, wherein the motor 100 can be integrated within the housing 102 of the compressor. However, in other embodiments, the motor 100 can have a separate housing that can be fluidically connected to the housing of the compressor.

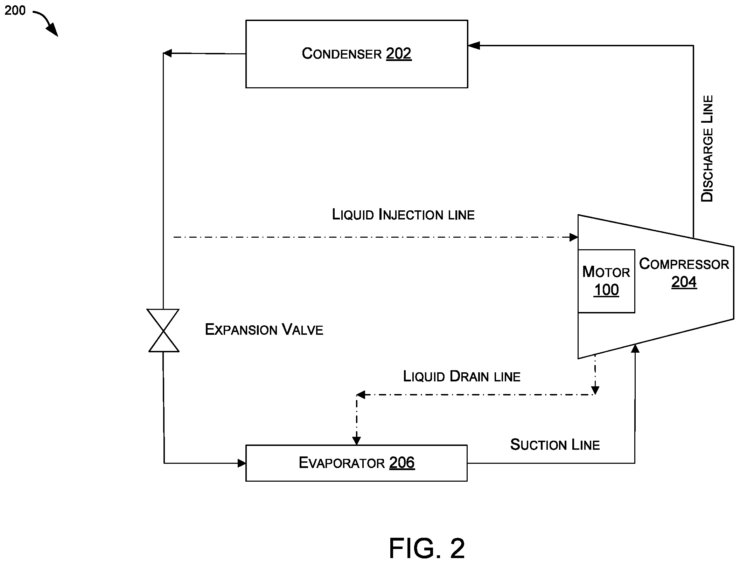

In one or more embodiments, the motor 100 can include a rotor 108 mounted over and locked to a shaft 104, where the rotor 108 can be configured to rotate about a central axial axis A-A' along with the shaft 104. The electric motor 100 can further include a stator 110 comprising a stator stack having a plurality of stator windings arranged around the rotor 108, with the stator windings being fixedly positioned within a housing 102 associated with the motor 100 or compressor. The electric motor 100 can be configured to be electrically connected to a power supply that can provide electric current to the stator windings to induce an electromagnetic field within the stator windings, resulting in a rotational motion of the rotor 108 about the central axis A-A'. The motor 100 can further include a cooling system that can include a first fluidic passage 112 extending from a first end (non-driving end) 106-1 towards a second end 106-2, along the length, of the shaft 104 The cooling system can further include a plurality of orifices 114 configured at predefined positions on the circumference of the shaft 104. Further, the plurality of orifices 114 can be fluidically connected to the first fluidic passage 112 via a plurality of second fluidic passages 116-1 to 116-N (collectively designated as 116, herein). In one or more embodiments, the second end (at the end 106-2) of the first fluidic passage 112 associated with the shaft 104 may be closed such that the shaft 104 may receive a fluid therein via the first end (at the end 106-1) and further supply the received fluid out of the orifices 114 via the second fluidic passages 116. However, in some embodiments, the second end of the first fluidic passage 112 may also be open. In one or more embodiments, the motor 100 can be configured to enable a refrigerant (fluid) associated with the compressor as shown in FIG. 2 to flow within the first fluidic passage 112 via the first end 106-1 of the shaft 104 and further flow out of the shaft 104 towards the stator 110 and/or the rotor 108 through the orifices 114 via the corresponding second fluidic passages 116.

In one or more embodiments, the first fluidic passage 112 can be non-parallel to the central axial axis A-A' of the shaft 104 with the second fluidic passages 116 extending outward from the first fluidic passage 112 in a radial direction from the central axial axis A-A'. The first fluidic passage 112 can be non-parallel to the central axial axis A-A' such that a first end of the first fluidic passage 112 remains at the center of the first end 106-1 of the shaft 104 and a second end of the first fluidic passage 112 extends at a predefined angle from the central axial axis A-A' towards the second end 106-2 of the shaft 104 Further, in some embodiments, the second fluidic passages 116 can extend radially outwards from the non-parallel first fluidic passage 112 and not from the central axial axis A-A' of the shaft 104 Accordingly, as the first fluidic passage 112 is non-parallel to the central axis A-A' of the shaft 104, the rotation of the shaft 104 about the central axis A-A' during the operation of the compressor can cause the refrigerant received within the first fluidic passage 112 to automatically flow or spray out of the orifices 114 via the second fluidic passages 116 under the centrifugal force of the shaft 104 and a pressure differential between an inlet of the first fluid passage 112 and the orifices 114 as shown in FIG. 1B. Besides, there is no need for additional coolant, or a pump to drive this coolant through the motor 100's cooling system, or an additional reservoir to store this coolant in this invention, as the motor 100 uses the same refrigerant flowing through the compressor) to cool the motor 100. This helps make the overall motor 100 and compressor assembly efficient and compact.

In one or more embodiments, the motor 100 or the cooling system can include a nozzle 118 disposed within the housing 102. The nozzle 118 can include an inlet 118-1 fluidically connected to a refrigerant line or refrigerant flow path associated with the compressor, to receive at least a portion of the refrigerant flowing through the compressor. The nozzle 118 can further include an outlet 118-2 connected to the inlet 118-1 of the nozzle 118. In one or more embodiments, the housing 102 of the motor 100 can include a third fluidic passage 122 drilled therethrough and fluidically connected to the inlet 118-1 of the nozzle 118, to enable the supply of the refrigerant associated with the compressor within the housing 102 or into the nozzle 118 or the shaft 104 Accordingly, the operation of the compressor can cause the refrigerant received within the first fluidic passage 112 to automatically flow or spray out of the orifices 114 via the second fluidic passages 116 under the centrifugal force of the shaft 104 and a pressure differential between outlet 118-2 of the nozzle 118 and the orifices 114 on the shaft 104.

The nozzle 118 can be disposed within the housing 102 such that the outlet 118-2 of the nozzle 118 remains at a predefined gap from an opening of the first fluidic passage 112 at the first end 106-1 of the shaft 104, such that the nozzle 118 can spray the received refrigerant into the first fluidic passage 112 of the shaft 104 while allowing the shaft 104 to rotate without coming in contact with the nozzle 118. This may allow the rotor 108 to freely rotate about its axis A-A' without any hindrance and also receive the refrigerant from the nozzle 118.

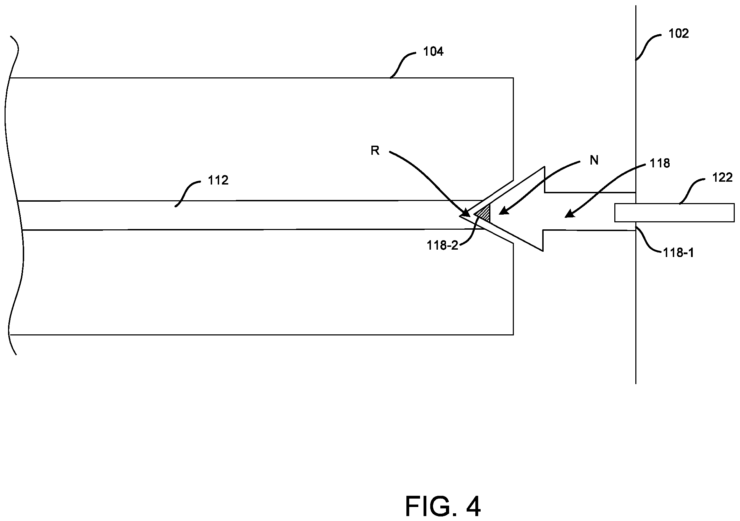

Referring to FIG. 4, in one or more embodiments, an outer surface, at an outlet end, of the nozzle 118 can have a notch-shaped profile N, and the other end, at the inlet 118-1, of the nozzle 118 can be disposed within the third fluidic passage 122 drilled in the housing 102 of the motor 100. Further, the first end 106-1 of the shaft 104 can include a recess R concurrent to the notch-shaped profile N of the outlet 118-2 of the nozzle 118. This recess R can be adapted to receive the notch-shaped end N of the nozzle 118 therein to create a labyrinth seal therebetween, such that the nozzle 118 can spray the received refrigerant into the first fluidic passage 112 of the shaft 104 with minimal or no leakage while allowing the shaft 104 to rotate without coming in contact with the notch-shaped end of the nozzle 118.

Referring back to FIG. 1A and 1B, in one or more embodiments, the housing 102 of the motor 100 can include a drain area 120 configured at the bottom to receive and collect the refrigerant drained from the stator 110 and/or the rotor 108, along with any refrigerant leaked within the motor 100. Further, the motor 100 can be configured to enable the supply of the drained refrigerant into a liquid drain line associated with the compressor or a refrigerant line in which the compressor is employed. Referring to FIG. 2, the liquid drain line can be further connected to an evaporator 206 being fluidically connected to the compressor 204 in the refrigerant line. Further, the nozzle 118 or third fluidic passage 122 provided in the housing 102 can be fluidically connected to a liquid injection line connected to a condenser 202 being fluidically connected to the compressor 204 in the refrigerant line 200. Accordingly, the cooling system of the motor 100 can receive cool liquid refrigerant from the condenser 202 via the liquid injection line, and further supply the refrigerant collected within the motor's housing 102 back to the refrigerant line (via the drain line) along with the vapor-phase of the refrigerant (formed within the compressor 204).

In one or more embodiments, the diameter of the first fluidic passage 112 can be greater than the diameter of the second fluidic passages 116. However, in other embodiments, the diameter of the first fluidic passage 112 can also be equal to or less than the diameter of the second fluidic passages 116. This may allow the cooling system to maintain the flow of the refrigerant through the shaft 104 while spraying a jet of the refrigerant, via the orifices 114, towards the stator 110 and the rotor 108.

In one or more embodiments, the plurality of orifices 114 can include a first set of orifices provided along the circumference at the first end 106-1 of the shaft 104, and a second set of orifices provided along the circumference at the second end 106-2 of the shaft 104, such that the orifices 114 remans adjacent to both the sides of the stator 110 and the rotor 108, allowing the refrigerant to be effectively and efficiently supplied to the stator 110 and the rotor 108. For instance, in one or more embodiments, the first set of orifices can be adjacent to a first end of the stator winding associated with the stator 110, and the second set of orifices can be adjacent to a second end of the corresponding stator winding. Further, in some embodiments, the first set of orifices can be adjacent to a first end of the rotor 108, and the second set of orifices is adjacent to a second end of the rotor.

Further, in one or more embodiments, the diameter of the first set of orifices 114 provided at the first end (refrigerant entry side) 106-1 of the shaft 104 can be greater than the diameter of the second set of orifices 114 provided at the second end (refrigerant exit side) 106-2 of the shaft 104 However, in other embodiments, the diameter of the first set of orifices 114 provided at the first end (refrigerant entry side) 106-1 of the shaft 104 can also be equal to the diameter of the second set of orifices 114 provided at the second end 106-2 of the shaft 104 Similarly, in one or more embodiments, the diameter of the second fluidic passages 116 provided at the first end (refrigerant entry side) 106-1 of the shaft 104 can be greater than the diameter of the second fluidic passages 116 provided at the second end 106-2 of the shaft 104 This arrangement can allow the cooling system to enable uniform and equal flow of the refrigerant out of all the orifices 114.

In one or more embodiments, the plurality of orifices 114 can include one or more pairs of first orifices provided along the circumference at the first end 106-1 of the shaft 104, such that the first orifices associated with each of the pairs remain opposite to each other. Further, the plurality of orifices 114 can include one or more pairs of second orifices provided along the circumference at the second end 106-2 of the shaft 104, such that the second orifices 114 associated with each of the pairs remain opposite to each other. However, in other embodiments, the number of orifices 114 on the shaft 104 can be one, in pairs, or multiple at one axial location (without being opposite to each other), and all such embodiments are well within the scope of the invention as set out in the appended claims.

In one or more embodiments, the first set of orifices provided along the circumference at the first end 106-1 of the shaft 104 at one or more of 0-degree angle, 45-degree angle, 90-degree angle, 135-degree angle, 180-degree angle, 225-degree angle, 270-degree angle, and 315-degree angle from a reference plane P extending along a center of the shaft 104 Similarly, the second set of orifices provided along the circumference at the second end 106-2 of the shaft 104 can be at one or more of 0-degree angle, 45-degree angle, 90-degree angle, 135-degree angle, 180-degree angle, 225-degree angle, 270-degree angle, and 315-degree angle from the reference plane of the shaft 104

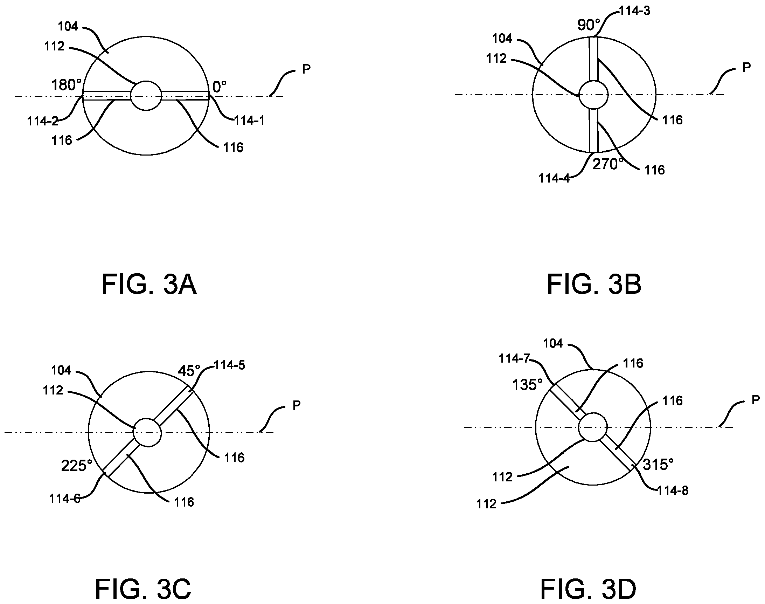

Referring to FIG. 3A to 3D, in one or more embodiments, a pair of orifices 114-1, 114-2 can be at 0-degree and 180-degree angles, another pair of orifices 114-3, 114-4 can be provided at 90-degree and 270-degree angles, another pair of orifices 114-5, 114-6 can be provided at 45-degree and 225-degree angles, and another pair of orifices 114-7, 114-8 can be provided at 135-degree and 315-degree angles from the reference plane P at the end 106-1 and/or the second end 106-2 of the shaft 104 These orifices 114-1 to 114-8 can be fluidically connected to the first fluidic passage 112 via the second fluidically passages 116, where the second fluidically passages 116 can radially extend from the first fluidic passage 112 towards the corresponding orifices 114. It would be obvious to a person skilled in the art that while various embodiments and drawings have been described herein for the shaft having the pair of orifices to be opposite or 180 degrees from each other at a specific location to help balance the shaft, however, the pair of orifices can be at a specific location but not necessarily be 180 degrees from each other. In addition, the orifices may not be in pairs at each location, however, there may be only one orifice drilled to the center passage 112, and all such embodiments are well within the scope of the invention as set out in the appended claims.

While various embodiments herein have been described for the motor 100 associated with a screw compressor, however, the teachings of the invention are equally applicable to motors associated with other types of compressor as well as for motors associated with non-compressor based applications, without any limitations, and all such embodiments are well within the scope of this invention as set out in the appended claims.

It is to be appreciated by a person skilled in the art that keeping the first fluidic passage 112 non-parallel to the central axis A-A' of the shaft 104 can cause the refrigerant received within the first fluidic passage 112 to automatically flow or spray out of the orifices 114 via the second fluidic passages 116 under a centrifugal force created upon rotation of the shaft 104 about the central axis A-A' and due to a pressure differential created between the nozzle outlet 118 and the orifices 114 during operation of the compressor. Moreover, the use of the same refrigerant (flowing through the compressor) to cool the motor 100 makes the overall motor 100 and compressor assembly efficient and compact, as there is no need for additional coolant, a pump to drive this coolant through the motor 100's cooling system, and an additional reservoir to store this coolant.

Thus, this invention overcomes the challenges associated with existing motor cooling systems associated with compressors as well as in general, by providing an improved cooling system for electric motors in compressor-integrated applications. The invention can achieve even and effective cooling of the motor while accommodating the physical and operational constraints of motor-compressor assemblies.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A motor (100) for a compressor, the motor comprising:
a rotor (108) configured over a shaft (104);
a stator (110) arranged around the rotor within a housing (102) associated with the compressor; and
a cooling system comprising:
a first fluidic passage (112) extending from a first end (106-1) towards a second end (106-2), along a length, of the shaft; and
a plurality of orifices (114) configured at predefined positions on a circumference of the shaft, the plurality of orifices is fluidically connected to the first fluidic passage via a plurality of second fluidic passages (116);
wherein the motor is configured to enable a refrigerant associated with the compressor to flow within the first fluidic passage via the first end of the shaft and further flow out of the shaft towards the stator and/or the rotor through the plurality of orifices via the corresponding second fluidic passages.

2. The motor (100) of claim 1, wherein the first fluidic passage (112) is non-parallel to a central axial axis (A-A') of the shaft (104) and the plurality of second fluidic passages (116) extends outwards from the first fluidic passage in a radial direction from the central axial axis.

3. The motor (100) of claim 2, wherein the first fluidic passage (112) is non-parallel to the central axial axis (A-A') such that a first end of the first fluidic passage remains at a center of the first end (106-1) of the shaft (104) and a second end of the first fluidic passage extends at a predefined angle from the central axial axis towards the second end (106-2) of the shaft.

4. The motor (100) of any of claims 1 or 2, wherein the first fluidic passage (112) is non-parallel to the central axis (A-A') such that rotation of the shaft (104) about the central axis during operation of the compressor causes the received refrigerant to flow or spray out of the plurality of orifices (114) via the plurality of second fluidic passages (116).

5. The motor (100) of any of claims 1 to 4, wherein the motor or the cooling system comprises a nozzle (118) disposed within the housing (102), wherein the nozzle comprises:
an inlet (118-1) fluidically connected to a refrigerant line or refrigerant flow path associated with the compressor, to receive at least a portion of the refrigerant flowing through the compressor, and
an outlet (118-2) connected the inlet of the nozzle, wherein the outlet of the nozzle remains at a predefined gap from an opening of the first fluidic passage (112) at the first end of the shaft (104), such that the nozzle sprays the received refrigerant into the first fluidic passage of the shaft (104) while allowing the shaft to rotate without coming in contact with the nozzle,
optionally, wherein an exterior body at an end of the nozzle has a notch-shaped profile (N), wherein the first end (106-1) of the shaft comprises a recess concurrent to and adapted to receive the notch-shaped end of the nozzle therein to create a labyrinth seal therebetween, such that that the nozzle sprays the received refrigerant into the first fluidic passage of the shaft while allowing the shaft to rotate without coming in contact with the notch-shaped end of the nozzle.

6. The motor (100) of claim 5, wherein the housing (102) of the motor comprises a third fluidic passage (122) drilled therethrough and fluidically connected to the inlet (118-1) of the nozzle (118), to enable the supply the refrigerant associated with the compressor within the housing or into the nozzle or the shaft (104).

7. The motor (100) of any of claims 1 to 6, wherein the second end of the first fluidic passage (112) is closed,
and/or
wherein a diameter of the first fluidic passage is greater than a diameter of the plurality of second fluidic passages (116).

8. The motor (100) of any of claims 1 to 7, wherein the plurality of orifices (114) comprises a first set of orifices provided along the circumference at the first end (106-1) of the shaft (104), and a second set of orifices provided along the circumference at the second end (106-2) of the shaft.

9. The motor (100) of claim 8, wherein the first set of orifices is adjacent to a first end of a stator winding associated with the stator (110), and the second set of orifices is adjacent to a second end of the stator winding,
or
wherein the first set of orifices is adjacent to a first end of the rotor (108), and the second set of orifices is adjacent to a second end of the rotor.

10. The motor (100) of any of claims 1 to 9, wherein a diameter of the first set of orifices provided at the first end (106-1) of the shaft (104) is greater than a diameter of the second set of orifices provided the second end (106-2) of the shaft,
and/or
wherein a diameter of the second fluidic passages (116) at the first end of the shaft is greater than a diameter of the second fluidic passages at the second end of the shaft.

11. The motor (100) of any of claims 1 to 7, wherein the plurality of orifices (114) comprises:
one or more pairs of first orifices provided along the circumference at the first end (106-1) of the shaft (104), wherein the first orifices associated with each of the pairs are opposite to each other; and
one or more pairs of second orifices provided along the circumference at the second end (106-2) of the shaft, wherein the second orifices associated with each of the pairs are opposite to each other.

12. The motor (100) of any of claims 1 to 7, wherein the plurality of orifices (114) comprises:
a first set of orifices provided along the circumference at the first end (106-1) of the shaft (104) at one or more of 0-degree angle, 45-degree angle, 90-degree angle, 135-degree angle, 180-degree angle, 225-degree angle, 270-degree angle, and 315-degree angle from a reference plane extending along a center of the first shaft; and
a second set of orifices provided along the circumference at the second end (106-2) of the shaft at one or more of 0-degree angle, 45-degree angle, 90-degree angle, 135-degree angle, 180-degree angle, 225-degree angle, 270-degree angle, and 315-degree angle from the reference plane.

13. The motor (100) of any of claims 1 to 12, wherein the compressor is a screw compressor associated with a vapor compression system.

14. The motor (100) of any of claims 1 to 13, wherein the housing (102) of the motor comprises a drain area (102) configured to receive and collect the refrigerant drained from the stator (110) and/or the rotor (108).

15. The motor (100) of claim 18, wherein the motor is configured to enable supply of the drained refrigerant into a liquid drain line associated with the compressor,
optionally, wherein the liquid drain line is further connected to an evaporator being fluidically connected to the compressor in a refrigerant line, and wherein the nozzle (118) is fluidically connected to a liquid injection line connected to a condenser being fluidically connected to the compressor in the refrigerant line.
